# EUROPEAN PATENT APPLICATION

(11) **EP 2 439 910 A1**
(43) Date of publication of application: **11.04.2012**
(21) Application number: 10306102.4
(22) Date of filing: 08.10.2010
(51) Int. Cl.: H04L 29/08

(54) **Method and system for maintaining connectivity between data storage devices in a distributed data storage system and corresponding device**

(71) Applicant: Thomson Licensing, 92130 Issy-les-Moulineaux (FR)
(72) Inventor: Le Merrer, Erwan, 92443, Issy les Moulineaux (FR); Le Scouarnec, Nicolas, 92443, Issy les Moulineaux (FR); Van Kempen, Alexandre, 92443, Issy les Moulineaux (FR)
(74) Representative: Le Dantec, Claude

(57) **Abstract**

In particular, the invention proposes a proactive method and device, that, in a distributed manner, detects cases of network topology changes when they occur and that may prevent correct propagation of data updates in the distributed data storage networks. The mechanism is reactive, and ensures maintenance of at least a correct path between any two nodes ('update path') that are part of an update overlay used for data update propagation.

## Description

### 1. Field of invention.

The present invention generally relates to distributed data storage systems. In particular, the present invention relates to a method of maintaining connectivity between data storage devices in a distributed data storage system that ensures reliable functioning of the distributed data storage network.

### 2. Technical background.

With the rapidly spreading deployment of mass data handling devices, reliable storage of huge amounts of data is required, for direct storage or as part of backup storage. As more and more devices (also referred to as nodes) are provided with network connectivity, distributed storage of data in network connected devices is considered as a cost effective solution. In such distributed data storage systems that can be deployed over non-managed networks such as on the Internet, methods have been developed that copy a same item of data to multiple network connected devices to ensure data availability and resilience to data loss. This is called data replication. Data replication has to be taken in a broad sense, and covers mere data duplication as well as usage of coding techniques such as erasure or regenerating codes (where encoded data is placed on storage devices for resilience). To cope with a risk of permanent data loss due to device failure or temporary data loss due to temporary device unavailability, data is replicated k times to ensure its persistence in the context of dynamic and crash-prone systems. A maintenance application builds a logical interconnection between nodes hosting a replica. This logical interconnection, often referred to as an update overlay graph, or in short update overlay, is used to propagate updates when a replica is modified at one of the nodes. One of the difficulties when using distributed data storage networks to store data is related to untrusted networks. Untrusted networks comprise nodes that do not mutually trust each other, such as the Internet. By contrast, in trusted networks such as home or company networks, nodes trust each other and security can be enforced through a policy that is commonly accepted by all nodes of the trusted network. In untrusted networks, propagation of data updates is not always ensured due to insufficient access rights, that in addition, may change dynamically caused by an absence of a security policy commonly accepted by all nodes of the untrusted network. In such networks, if no particular care is paid to the effective connectivity of the update overlay, with respect to dynamically evolving access rights and dynamic connections and disconnections of nodes, updates of replicas may not propagate correctly anymore, and data persistence and consistency may not be ensured.

What is needed is a method and device for maintaining connectivity between devices in a distributed storage system that is able to cope with the dynamic aspect of the distributed storage system.

### 3. Summary of the invention.

The present invention aims at alleviating some of the inconveniences of prior art.

In particular, the invention proposes a proactive method and device, that, in a distributed manner, detects cases of network topology changes when they occur and that may prevent correct propagation of data updates in the distributed data storage networks. The mechanism of the invention is reactive, and ensures maintenance of at least a correct path between any two nodes ('update path') that are part of an update overlay used for data update propagation. An update overlay, in the context of the invention, is defined as a structure that is used to propagate updates when a replica is modified at one of the nodes. This update overlay is managed by a storage application which builds a logical interconnection between nodes hosting replicas of data items (i.e. of a file, of a part of a file, or even group of files such as personal files, video files, or shared files). The invention allows to better manage the resilience of the update overlay as it copes with node disconnection and failure, but also with restriction of access rights of nodes of the update path. The invention allows ensuring that updates to data will propagate through nodes of the update overlay.

For this, the invention proposes a method of detection of critical devices in a data propagation path in a distributed data storage system, characterized in that the method comprises a step of,

for each device in a set of data storage devices of the distributed data storage system that is used to store a particular data item in the distributed data storage system, determination whether the device is a critical device for data propagation in the distributed data storage system; and a step of for each device in the set which is determined to be a critical device, a step of signaling a detection of a critical device to all devices of the set to which the critical device is directly connected, the signaling comprising an item of information representative of an identification of the critical device and a step of transmission of a list of the all devices to the all devices, the list comprising for each device in the list an item of information representative of an identification of the each device.

According to a variant embodiment, the method further comprises a step of determination of at least two levels of criticalness comprising at least a first level indicating a detection of a critical device, and at least a second level indicating a detection of a change in access rights that prevents data propagation in the set, and that information representative of the at least a first and at least a second level of criticalness is comprised in the signaling.

According to a variant embodiment, the signaling comprises an item of information representative of an indication if the critical device is a core device, a core device being a device that can fragment the set in at least two fragments with each of the at least two fragments comprising a predetermined number of devices in the set.

According to a variant embodiment, the determination of the level of criticalness is determined periodically.

The invention also proposes a method of adding connection redundancy to devices in a distributed data storage system, characterized in that the method is implemented by at least one of the devices and that the method comprises a step of reception of a detection of a critical device for data propagation in the distributed data storage system, and a step of reception of a list of devices to which the critical device is directly connected, the list comprising for each device in the list an item of information that is representative for an identification of the each device, and a step of establishment of connections between each of the devices that are used to store a particular data item in the distributed data storage system, the connections bypassing the critical device.

According to a variant embodiment, the method comprises a step of establishment of a connection to a device from the list that has an identifier that according to numerical order immediately follows an identifier of the at least one of the devices.

The invention also concerns a device part of a distributed data storage system, that it comprises means for signaling detection of at least one critical device in the distributed storage system that is part of a data propagation path in the distributed storage system to a set of devices of the distributed data storage system that are used to store a particular data item in the distributed data storage system and that are immediately connected to the critical device, an critical device being a device that can fragment the set in at least two fragments with each of the at least two fragments comprising a predetermined number of devices in the set; and means for establishment of connections, upon the detection, between each of the devices that are used to store a particular data item in the distributed data storage system, the connections bypassing the critical device.

### 4. List of figures.

More advantages of the invention will appear through the description of particular, non-restricting embodiments of the invention.

The embodiments will be described with reference to the following figures:
Figure 1 illustrates an example network architecture where the invention can be implemented.
Figure 2 illustrates an update overlay graph that is applicable to figure 1.
Figure 3 illustrates an update overlay graph illustrating the case where a critical node has changed access rights for access to files by other nodes.
Figure 4 illustrates the notion of connectivity calculation.
Figure 5 illustrates a method of determination of the presence of critical nodes in the update overlay according to the invention.
Figure 6 illustrates a method according to a particular embodiment of the invention that is executed upon reception of an alert.
Figure 7 illustrates the form of the connections in an update overlay based on the example of figure 3.
Figure 8 illustrates a device capable of implementing the invention according to a specific embodiment.
Figure 9 illustrates a system according to a particular embodiment invention.

### 5. Detailed description of the invention.

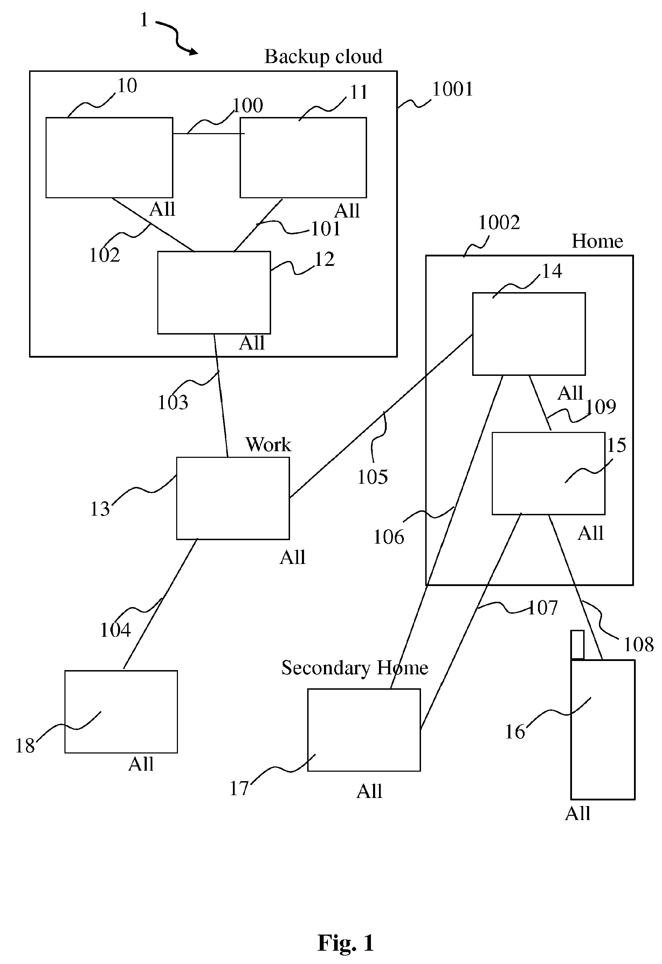

**Figure 1** illustrates an example network architecture where the invention can be implemented. The network comprises a cloud 'backup' 1001 with interconnected devices 10-12, which is connected to a 'work' device 13 which is in turn connected to a device 18 and to a cloud 'home' 1002 which comprise devices 14 and 15. Cloud 'home' 1002 is in turn connected to 'secondary home' 17 and to hand-held device 16.

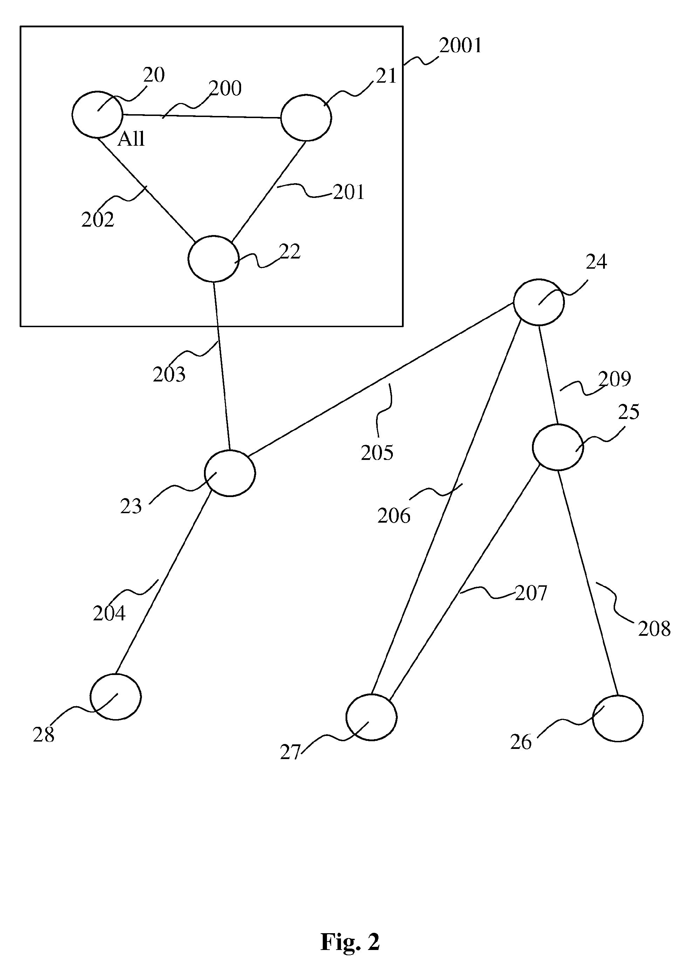

**Figure 2** illustrates an update overlay graph that is applicable to figure 1. The devices 10-18 from figure 1 are represented as nodes 20-28 that are connected by means of connections 200-209. The graph shows a read access representation of an update overlay for read access to all files "All", which includes Files "Contacts" and "Photos". All nodes 20-28 have access to all files and updates of data in one of the nodes 20-28 can be propagated to all nodes 20-28 so that data consistency is ensured.

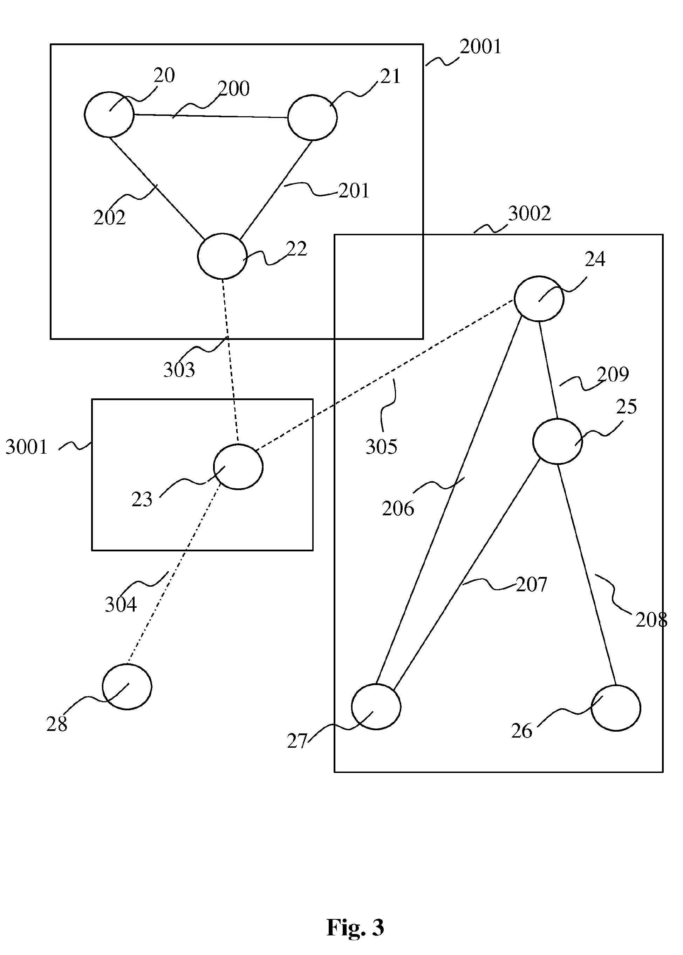

**Figure 3** illustrates an update overlay graph illustrating the case where node 23 has changed access rights for access to files by other nodes from "all" to "contacts" only. We will use the terminology that node 23 changed access rights for all other files than 'contacts' from "transit" to "blocking". Solid lines indicate connectivity (through sufficient access rights) and broken lines indicate no connectivity (caused by insufficient access rights). As can be observed, the resulting update overlay for files of "All" other than "contacts" is fragmented in three subnetworks, i.e. subnetwork 2001 comprising devices 20-22, subnetwork 3001 comprising device 23, and subnetwork 3002 comprising devices 24-27. Updates to files other than to 'contacts' cannot be propagated to all nodes of the update overlay, which can result in data inconsistencies. An update flow that originates for example from node 24 is not able to reach node 23, nor is it able to reach the devices 20-22 in the backup cloud 2001. Of course, for files 'contacts' there is no insufficiency of access rights and changes to 'contact' data are properly propagated through the nodes 20-28.

A particular embodiment of the invention is now explained with the help of Figs. 1-3. According to this embodiment, an alert is raised when a so-called critical node is detected in an update overlay. An alert can be a message, which specifies an identifier of the critical node. A critical node is a node that, due to an access right restriction or disconnection, would cut the update overlay in isolated parts, i.e. resulting in fragmentation of the update overlay.

According to another embodiment, an alert is raised when a so-called critical node changes state from transit to blocking.

The above embodiments can be combined to form a particular embodiment that combines the advantages of both, and can be used for example to fine-grain the alerts.

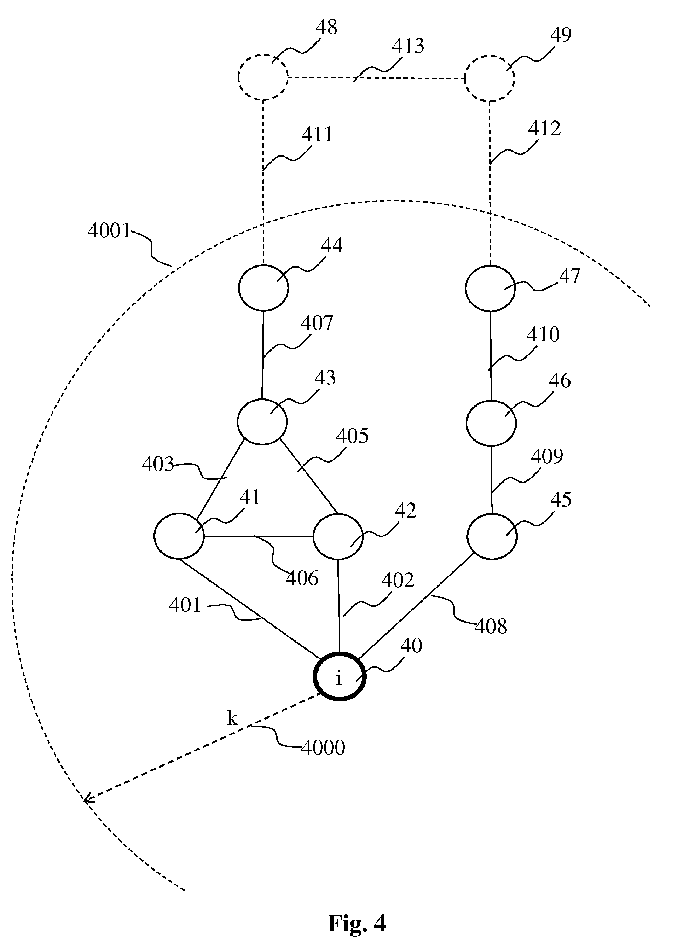

According to a particular embodiment, no changes can or are to be made to the update overlay, i.e. no connections can be made to prevent fragmentation of an update overlay or to repair an already fragmented update overlay. This restriction can be the cause of a deliberate policy, or due to technical reasons. In such an embodiment, previously discussed alerts can be exploited to inform a user for a dangerous situation that can result in data inconsistencies and data loss. For example, the alerts can be used to inform a user or an application that changes access rights of an undesirable side-effect of applying the restrictions, or it can inform a user or an application of a sudden restriction of access rights in a node of the update overlay that leads to fragmentation of the update overlay, or even of a disconnection of a node in the update overlay that leads to fragmentation of the update overlay, so that the user or the application can take appropriate measures. The embodiment comprises a detection of the existence of critical nodes in the update overlay. For this detection, two types of criticalness can be considered: *1-connectivity* and a relaxed version, *k-1 connectivity*. For each node that is determined as being a critical node, an alert is generated when access rights for this node change from *transit* to *blocking.* This alert is for example generated through monitoring, by the nodes of the update overlay that are directly connected to the critical node, of a state change from transit to blocking of the critical node. An alert is propagated to all nodes of the update overlay. In the context of the invention, 1-connectivity is defined as a maximum state of criticalness of connectivity of an update overlay: an access right restriction or disconnection of just one node can lead to fragmentation of the update overlay. The connectivity of the update overlay can be calculated periodically in order to detect a state of 1-connectivity. Though the calculation of the 1-connectivity is precise, it can become time-consuming when the size of the update overlay is large, i.e. when the number of nodes in the update overlay is relatively high. In such case, the previously mentioned more relaxed k-1 connectivity can be calculated instead. The decision of which calculation to use i.e. 1-connectivity or k-1 connectivity can be decided when the number of nodes in an update overlay exceeds a predetermined threshold. This predetermined threshold can be determined from simulations or real measurements of time consumption of 1-connectivity for different update overlays sizes. A k-connectivity is determined as follows: each node of the update overlay verifies the problems that it may cause in a limited area that can be imagined as a sphere with radius k of which is centered on the node. Rather than being a global calculation of connectivity executed by a node that spans a whole update graph as is the case for 1-connectivity calculation, k-1 connectivity calculation is a local calculation, executed by each node of the update graph, that spans to a radius k around the node executing the calculation (to which we will refer to as i), the radius k representing the number of hops to reach other nodes. If it is determined from this calculation that the removal of node i causes the disconnection of one or more nodes of the update overlay, the update overlay is said to be k - 1 connected, and i is considered as being a critical node. As every node in the update overlay executes the same calculation, every critical node of the update overlay is eventually identified. This relaxation of the connectivity calculation however can result in falsely considering nodes as being critical nodes, as the limitation to radius k may result in not considering redundant connections between nodes of the update overlay that are constituted by paths of length superior to k hops, starting at node i. According to a particular embodiment of the invention the value of k is predetermined and chosen to be a fraction of the diameter of the overlay graph (measured in hops), that can be computed in a distributed manner with state of the art methods. Note that falsely considering a node being a critical node will eventually result in the creation of additional 'superfluous' connections between the nodes of the update overlay which may be undesirable from a point of view of efficiency; nevertheless, connectivity of the overlay is still preserved. Therefore, according to a variant embodiment the value of k is determined during operation of the method of the invention. According to this embodiment, k is set individually by each node to an initial low value, 4 to 6 for instance. Each node then tests for the presence of a connection loop that is within the range of k hops from the node. If a loop is not found, k is incremented until the node finds a loop or until k reaches a maximum value that is judged reasonably large for the distributed data storage system. This maximum value is typically around In N or simply a fraction of the overlay diameter (the diameter being the longest of the shortest paths of the overlay, and can be computed at run time). This heuristic method has the advantage to allow for each node an individual determination of a value for k, that is best adapted to the place of the node in the overlay (i.e. core node or network node; the notion of core node wil be explained furtheron). A uniform setting of a value for k can be too large for nodes in some well-connected parts of the update overlay, whereas it could be too short in some less well-connected part of the update overlay.An example of false consideration of a node i being a critical node for k = 3 is illustrated in **Figure 4****.** Nodes 40-49 are nodes of a same update overlay. Lines 401-413 represent connections between these nodes. Broken lines 411-413 represent connections that are not considered by a k-1 connectivity calculation done by node i 40. According to this example k = 3, which is illustrated by arrow 4000 and arc 4001. As can be seen, nodes 48 and 49 are interconnected and are further connected to nodes 44 and 47. When node i 40 has executed the k-1 connectivity calculation, it considers itself as being a critical node, because any disconnection of itself or restriction of access rights for access of its data by surrounding nodes would lead to fragmentation of the update overlay in two sub-networks comprising bodes 41-44 and 45-47. As the k-1 calculation does not extend beyond k, the calculation does not take into account the connections between nodes 48-49 and the connections of these nodes to nodes 44 and 47. A noticeable feature of this embodiment is that if no k-1 connectivity problem is detected at any node of the update overlay, then the update overlay is at least 2-connected.

According to a variant embodiment, generation of alerts is limited to nodes that would, when becoming a blocking node, either through restriction of access rights in such that data propagation is not ensured in the update overlay or through a disconnection of the node from the update overlay), fragment an update overlay in at least two fragments with each of the at least two fragments comprising more than one (or a predefined number of) nodes of the update overlay. In this way, generation of alerts on less critical nodes that are on the edges of the update overlay is avoided, which helps saving overhead for the invention implementation in terms of number of messages exchanged, We will further refer to the less critical nodes on the edges of the update overlay as 'edge' nodes, as opposed to 'core' nodes that can fragment an update overlay in at least two fragments with each of the at least two fragments comprising more than one node of the update overlay.

According to yet another variant embodiment, alerts are divided in at least two types that comprise an indication of an alert level. For example, a first type of alert is an alert on an edge node. A second type of alert is an alert on a core node. An example of an alert level is low level for detection of a critical node, and high level for change of state of a critical node from transit to blocking.

The alert levels can then be exploited by (a) user(s) and/or (an) application(s) to take appropriate measures.

According to yet another variant embodiment, so called positive alerts are generated (as opposed to the previously discussed alerts that can be referred to as negative alerts) that indicate a reconnection of a disconnected node to the update overlay, and/or that indicate a change of state of a critical node from blocking to transit. In this way, appropriate measures can be taken, such as drop of bypass connections or stopping of monitoring of a no-longer-critical node by its immediate neighbor nodes. Of course, both variant embodiments may be combined in order to create a particular advantageous variant embodiment.

As mentioned, nodes of the update overlay that are direct neighbors of the critical node are in charge of monitoring changes in state of the critical node. If a critical node becomes a blocking node, a negative alert identifying the critical node is propagated by the monitoring nodes to all the nodes of the update overlay. Upon receipt of the alert, each node of the update overlay is aware of the existence of the blocking node in the update overlay that is preventing data updates in the overlay, and each node can exploit this information, for example to inform (a) user(s) and/or (an) application(s) of the event, so that appropriate measures can be taken.

According to a variant embodiment of the invention, the previously discussed negative alerts are used for prevention of update overlay fragmentation (e.g. in case of a negative alert related to a detection of a critical node) and/or for auto-repair of a fragmented update overlay (e.g. in case of a negative alert related to a state change from transit to blocking of a critical node, or in case of a negative alert related to a disconnection of a critical node). Prevention of update overlay fragmentation or repair of an already fragmented update overlay is done through creation of new connections between nodes of the update overlay that bypass the critical node. For example, related to Fig. 3, upon receipt of one of the discussed negative alerts, nodes 22, 24, 28 which are neighbor nodes of critical node 23 (they have direct connections with that node), create interconnections and thus bypass the critical node 23. According to a variant embodiment, positive alerts trigger a drop of the created bypass connections, in order to limit the number of interconnections between the nodes of the update overlay and to keep its complexity at a desired level. According to a variant embodiment, the negative alerts are used to add nodes to the update overlay that replace disconnected nodes or blocking nodes, and likewise, negative alerts are used to remove nodes from the update overlay. These actions (add or remove) can be triggered according to a level of redundancy desired for the data stored by the update overlay.

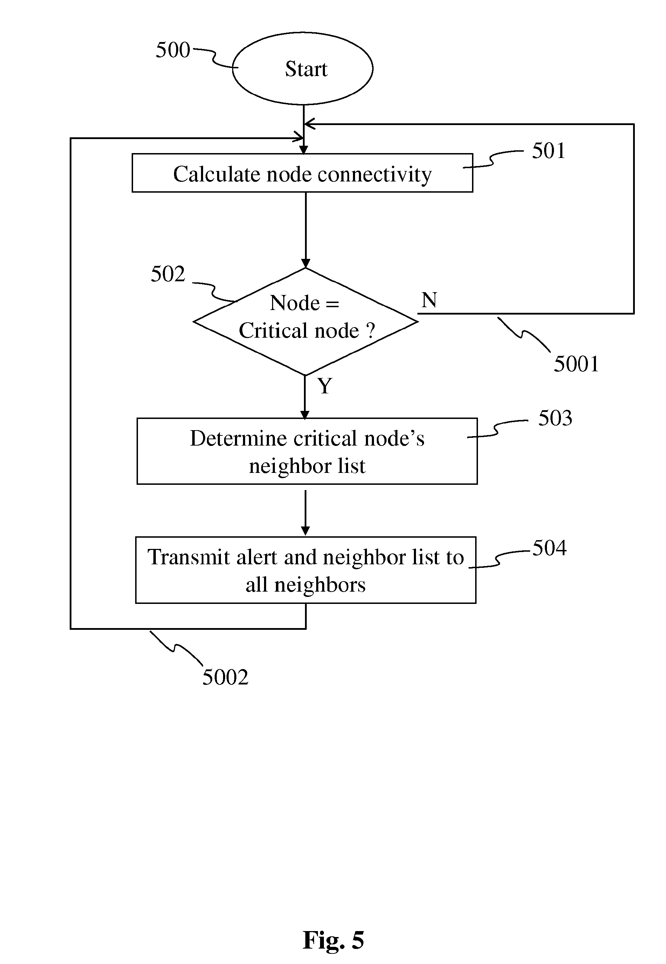

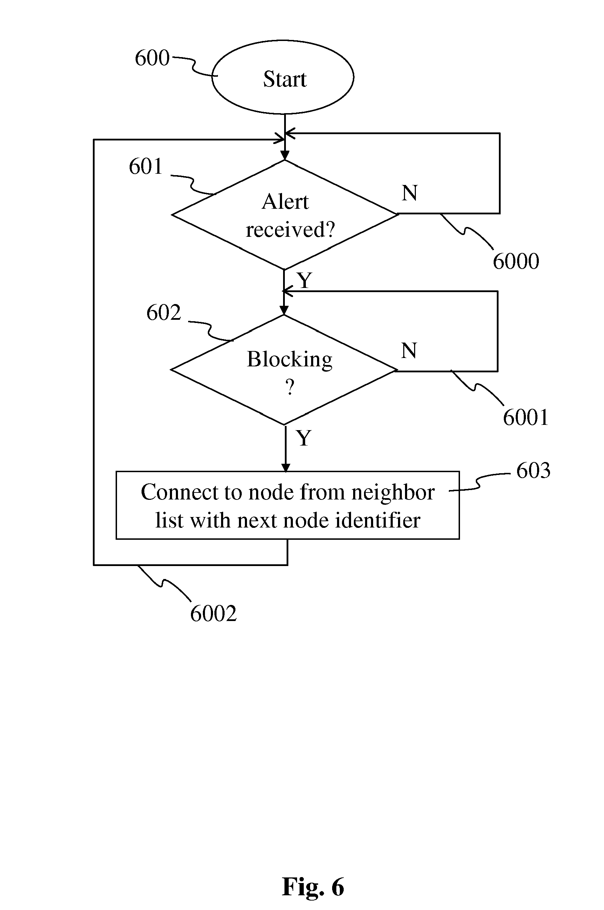

According to the variant embodiment that uses negative alerts for prevention or repair of update overlay fragmentation, a critical node is in charge of sending a list of neighbor nodes of the update overlay to all these neighbors, and updates them on any changes in the list. This list is used by the neighbors to create the bypass connections in case of occurrence of one of the previously discussed negative alerts concerning the critical node. According to a variant embodiment of the invention, each neighbor connects to any other node in the list. According to another variant embodiment of the invention, the previous embodiment is optimized by reducing the number of connections made for the bypass as is explained as follows. Each node in the distributed storage network has an identifier that can be numerically ordered, such as a numerical order, alphabetical order or a combination of both. One of the nodes in the list is elected, for example the node with the lowest identification number (thereby allowing full automation of the election process, each node in the list having the full list and thus being able to determine which neighbor has the highest identification number). The elected node is responsible for creating connections with all other nodes in the list, thereby replacing the critical node. According to yet another variant embodiment of the invention, the previous variant is further optimized in order to avoid putting all load of supporting the connections of the critical node on one replacement node, and the load is balanced through creation, by each node in the node list of a connection to a node having an identifier that is closest following its own identifier, or to the lowest identifier in the list if the own identifier is the highest identifier of the nodes in the list. This algorithm is formalized in Figure 5 and Figure 6.

**Figure 5** illustrates a method of determination of the presence of critical nodes in the update overlay according to the invention. The steps can be executed by each node individually, or by a centralized management function. In a first step 500, the process is started. In steps 501-502, where for each node in the update overlay it is determined if it is a critical node through calculation of the node connectivity, for example by means of the previously described 1-connectivity or k-1 connectivity calculation methods. If it is determined in steps 501-502 that the node is a critical node, a neighbor list is determined in a step 503, i.e. a list of nodes it is directly connected to. In a step 504, this list is transferred to all nodes in the list, and an alert is transferred (signaled) to the nodes in the neighbor list, and the process repeats with the execution of step 501. According to a variant embodiment, the alert is a message that comprises the list. According to a variant embodiment, the alert is an event that, when received by a node, allows the receiving node to obtain the list.

If it is determined in steps 501-502 that a node is not a critical node, the process repeats with step 501.

According to a variant embodiment of the invention, the method of determination comprises a step of determination of two or more levels of criticalness which levels comprise at least a first level indicating a detection of a critical device, and at least a second level indicating a detection of a change in access rights that prevents data propagation in the set of devices of the update overlay. In which case, information representative of the level of criticalness is comprised in the signaling.

According to a variant embodiment, the signaling comprises information that is representative for an indication if a detected critical device is a core device or rather an edge device, a core device, as has being explained previously, being a device that can fragment the update overlay in one or more fragments that comprise a predetermined number of devices. For example, if the predetermined number is 1, critical devices that have only one connection to the rest of the devices in the update overlay will not be considered as being core critical devices but rather as being edge devices that are not critical to the propagation of data in the update overlay, i.e. they are not devices through which data updates transit to other devices of the update overlay. The information of the critical device being a core device or not can then be exploited by for example a higher level application, that decides the appropriate actions to take, for example to inform a higher layer responsible of management of data redundancy in the distributed data storage network to add/replace an edge device by another device in order to ensure that the number of devices in the update overlay remains sufficient for a desired level of data replication.

According to a variant embodiment the previously described embodiments are combined so as to form a particular sophisticated embodiment that is particularly complete in terms of the information that is transmitted with each alert, so as to allow a fine-grading of the alerts and of the appropriate actions to take upon reception of alerts.

**Figure 6** illustrates a method according to a particular embodiment of the invention that is executed upon reception of an alert. In a first step 600, the process is started. In a step 601, it is determined if an alert has been received. If such alert is received, it is determined in a decisional step 602 if the alert concerns a detection of a critical node or a state change of a critical node from 'transit' to 'blocking'. If the latter is the case, the node connects to a node of the received list of neighbor nodes that is has an identifier that is ordinal next to its own identifier (or that has the lowest identifier in the list when the own identifier is the highest identifier in the list). In this way, the critical node is bypassed with a minimal number of connections and the update overlay is ensured.

According to a particular embodiment of the invention, the methods of the invention as illustrated by figures 5 and 6 are implemented by a same device, since a device of the update overlay that detects one or more critical devices in the distributed data storage system can also be a device that adds connections to the devices of the update overlay.

According to a variant embodiment of the invention, the invention is implemented by a particular device in the distributed data storage network, such as a management server.

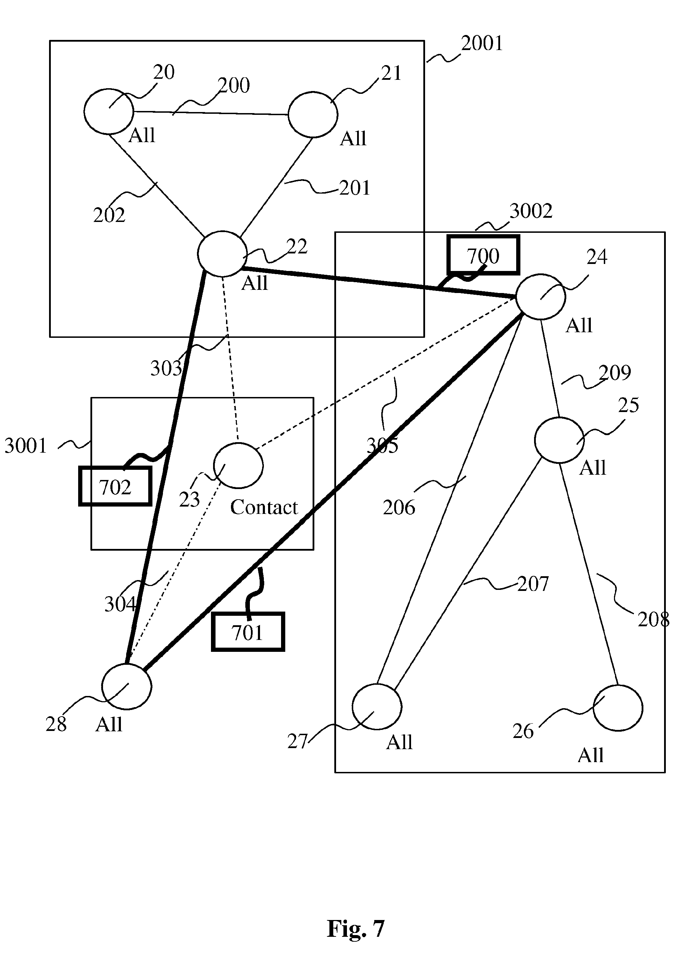

**Figure 7** illustrates the form of the connections in an update overlay based on the example of figure 3, where node 23 has restricted access rights to files 'contacts' only, resulting in a fragmentation of the update overlay for other data than 'contacts'. The application of the algorithm illustrated by means of figs. 5 and 6 results in establishment of connections 700-702 between nodes 22, 24 and 28, which are the neighbor nodes of node 23. These new connections or bypass connections ensure propagation of 'All' data in the update overlay that comprises nodes 20-28. Note that all nodes 20-28 are still interconnected for data 'contacts' (the update overlay for data 'contacts' comprises broken lines 303-305).

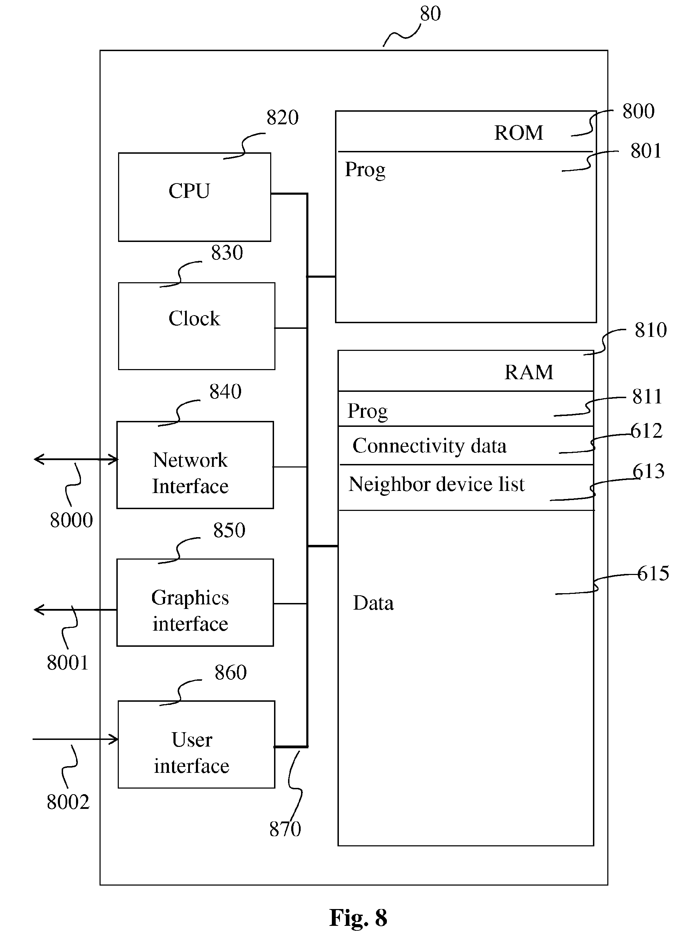

**Figure 8** illustrates a device capable of implementing the invention according to a specific embodiment. The device can be one of the devices 10-18 of figure 1, that is represented by nodes 20-28 in figures 2,3, and 7, or one of the nodes 40-49 of figure 4.

The device 80 comprises a Read-Only Memory (ROM) 800, a Random Access Memory (RAM) 810, a Central Processing Unit (CPU) 820, a clock 830, a network interface 840, a graphics interface 850, and a user interface 860. All of these components are interconnected via a data- and communication bus 870. CPU 820 controls the device 80 according to a program that is stored in ROM 800 in a memory zone 801. Clock device 830 provides the components of device 80 with a common timing in order to sequence and synchronize their operation. Network interface 840 receives and transmits data with external devices via connection 8000, such as transmission and reception of alert messages and of neighbor lists. It is also through this network interface 840 that connections are established with other devices of the distributed data storage network. An optional graphics interface 850 is connected to an optional external rendering device via connection 8001. An optional user interface 860 receives input commands from a user via connection 8002. ROM memory zone 801 comprises instructions that implement the at least one of the described embodiments of the invention. Upon powering on of device 80, CPU 820 copies the program 'Prog' from ROM memory zone 801 into RAM memory zone 811, and executes the copied program. Upon execution of the copied program, the program allocates memory space for variables needed for its execution in RAM memory zone 815, and copies list of device addresses 802, device availability vectors 803, and device sets 804 into respective RAM memories 812-814. The device 80 is now operational and upon reception of a request for storing of a data item, the method of the invention is activated, which method is part of the program stored in ROM 800 memory zone 801. The CPU (820) serves among others as, and CPU (820) serves as a means for. ROM memory 800 and RAM memory 810 are storage means for storing at least part of a data item(s) stored by an update overlay.

According to a variant embodiment, the invention is entirely implemented in hardware, for example as a dedicated component (for example as an ASIC, FPGA or VLSI) (respectively « Application Specific Integrated Circuit », « Field-Programmable Gate Array» and « Very Large Scale Integration ») or as distinct electronic components integrated in a device or in a form of a mix of hardware and software.

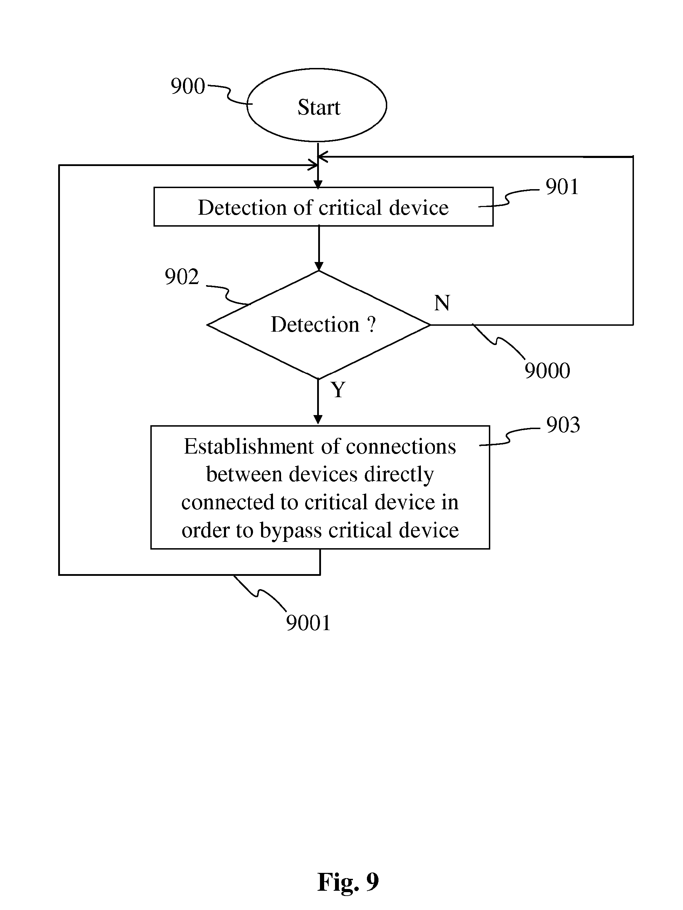

**Figure 9** illustrates a system according to a particular embodiment invention. In a first step 900, the system is started. In a step 901, a detection is done of a critical device in the distributed storage system that is part of a data propagation path in the distributed data storage system. This detection is then signaled to the set of devices that store a particular data item, i.e. devices of the update overlay for the particular data item, that are immediately connected to the critical device, the so-called list of neighbor devices. In a decisional step 902, it is determined if such detection is done, for example through reception of an alert, and if so, connections are established in a step 903 between each of the devices in the list of neighbor devices, the connections thus bypassing the critical device, and thus ensuring the data propagation.

## Claims

1. Method of detection of critical devices in a data propagation path in a distributed data storage system, **characterized in that** the method comprises the following steps:
- for each device in a set of data storage devices of said distributed data storage system that is used to store a particular data item in the distributed data storage system, determination (501, 502) whether said device is a critical device for data propagation in said distributed data storage system;
- for each device in said set which is determined to be a critical device:
- signaling a detection of a critical device (504) to all devices of said set to which said critical device is directly connected, said signaling comprising an item of information representative of an identification of said critical device;
- transmission of a list of said all devices (504) to said all devices, said list comprising for each device in said list an item of information representative of an identification of said each device.

2. Method according to claim 1, **characterized in that** said method further comprises a step of determination of at least two levels of criticalness comprising at least a first level indicating a detection of a critical device, and at least a second level indicating a detection of a change in access rights that prevents data propagation in said set, and that information representative of said at least a first and at least a second level of criticalness is comprised in said signaling.

3. Method according to claim 1 or 2, **characterized in that** said signaling comprises an item of information representative of an indication if said critical device is a core device, a core device being a device that can fragment said set in at least two fragments with each of the at least two fragments comprising a predetermined number of devices in said set.

4. Method according to any of claims 1 to 3, **characterized in that** said determination of said level of criticalness is determined periodically.

5. Method of adding connection redundancy to devices in a distributed data storage system, **characterized in that** said method is implemented by at least one of said devices and that said method comprises the following steps:
- reception of a detection of a critical device (601, 602) for data propagation in said distributed data storage system;
- reception of a list of devices to which said critical device is directly connected, said list comprising for each device in said list an item of information that is representative for an identification of said each device; and
- establishment of connections (603) between each of said devices that are used to store a particular data item in said distributed data storage system, said connections bypassing said critical device.

6. Method according to claim 5, **characterized in that** said method further comprises a step of:
- establishment of a connection to a device from said list that has an identifier that according to numerical order immediately follows an identifier of said at least one of said devices.

7. Device part of a distributed data storage system, **characterized in that** it comprises:
- means for signaling detection of at least one critical device in said distributed storage system that is part of a data propagation path in said distributed storage system to a set of devices of said distributed data storage system that are used to store a particular data item in said distributed data storage system and that are immediately connected to said critical device, an critical device being a device that can fragment said set in at least two fragments with each of the at least two fragments comprising a predetermined number of devices in said set; and
- means for establishment of connections, upon said detection, between each of said devices that are used to store a particular data item in said distributed data storage system, said connections bypassing said critical device.
